# EUROPEAN PATENT APPLICATION

(11) **EP 4 847 166 A1**
(43) Date of publication of application: **02.12.2026**
(21) Application number: 26181410.7
(22) Date of filing: 27.05.2026
(51) Int. Cl.: B22F 5/00, B22F 10/25, B22F 10/28, B22F 10/66, B23K 15/00, B23K 26/342, B33Y 10/00, B33Y 40/20, B33Y 80/00, F01D 9/02, F23R 3/00

(54) **TURBOMACHINE AND METHOD OF MANUFACTURE**

(30) Priority: 30.05.2025 US 202563815167 P
(71) Applicant: RTX Corporation, Farmington, CT 06032 (US)
(72) Inventor: BINEK, Lawrence, East Hartford, 06118 (US); BREITZMANN, Peter, East Hartford, 06118 (US); ASARE, Ted, East Hartford, 06118 (US)
(74) Representative: Dehns

(57) **Abstract**

A method of manufacturing a core article (10) of a turbine engine includes forming a body (48) comprising an integrally formed annular duct (12) and combustor liner (14) via a powder bed fusion additive manufacturing process. The combustor liner (14) defines a combustion chamber (22) about the inner duct (12). The body (48) is disposed about a longitudinal axis (A). The method further includes forming a plurality of vanes (16) on the body (48) via a directed energy deposition additive manufacturing process. The plurality of vanes (16) extends radially from the combustor liner (14). A surface roughness on surfaces of each of the plurality of vanes (16) is reduced and an annular outer casing (18) is formed via a directed energy deposition additive manufacturing process about the body. The outer casing connects the plurality of vanes (16).

## Description

### BACKGROUND

The present invention is directed generally to a turbomachine and, more particularly, to a turbomachine formed by additive manufacturing.

Additive manufacturing can be used to form complex unitized structures, including, for example structures of a turbomachine, such as small, limited use, turbine engines, which are designed to be inexpensive. While additive manufacturing processes such as powder bed fusion manufacturing can be used to create complex engine components including housings with complex internal structures, mechanical post processing of internal critical flow paths is limited due to the nature of the production technology. As such, the cost-saving associated with additive manufacturing is often accompanied by a reduction in component performance.

A need exists for low-cost turbomachines with improved performance.

### SUMMARY

In one aspect of the invention, a method of manufacturing a core article of a turbine engine includes forming a body comprising an integrally formed duct (e.g., an inner and/or annular duct) and combustor liner via a powder bed fusion additive manufacturing process. The combustor liner defines a combustion chamber about (around) the duct. The body is disposed about (around) a longitudinal axis. The method further includes forming a plurality of vanes on the body via a directed energy deposition additive manufacturing process. The plurality of vanes extends radially from the combustor liner. A surface roughness on surfaces of each of the plurality of vanes is reduced and an annular outer casing is formed via a directed energy deposition additive manufacturing process about (around) the body. The outer casing connects the plurality of vanes.

In another aspect of the invention, a turbine engine core article includes a duct (e.g., an inner and/or annular duct) disposed about a longitudinal axis, a combustor liner disposed about the inner duct and defining a combustion chamber, an outer casing disposed about the combustor liner, and a plurality of vanes connecting the outer casing to the combustor liner. Each of the plurality of vanes includes a pressure side wall and a suction side wall having an Ra surface roughness equal to or less than 64 microinches.

The method or article of the preceding paragraphs may optionally include, additionally and/or alternatively, any one or more of the following features, configurations, additional components, and/or steps:
In any of the aspects or embodiments described above or herein, the surface roughness may be reduced to provide an Ra surface roughness equal to or less than 64 microinches.

In any of the aspects or embodiments described above or herein, the surface roughness may be reduced by a machining tool prior to forming the outer casing.

In any of the aspects or embodiments described above or herein, the vanes may be formed directly on a surface of the body formed via the powder bed fusion additive manufacturing process.

In any of the aspects or embodiments described above or herein, the vanes and body may be formed from the same material.

In any of the aspects or embodiments described above or herein, the directed energy deposition process may include (use of) a powder feedstock.

In any of the aspects or embodiments described above or herein, the directed energy deposition process may include (use of) a wire feedstock.

In any of the aspects or embodiments described above or herein, forming the plurality of vanes may include forming a first layer of the plurality of vanes followed by successive layers of the plurality of vanes. The first layer and successive layers may extend circumferentially about the longitudinal axis and a build direction (e.g., a first build direction) of the plurality of vanes may be orthogonal to the longitudinal axis (e.g., the build direction extends radially outwards from the longitudinal axis).

In any of the aspects or embodiments described above or herein, the outer casing may be formed along a build direction (e.g., a second build direction) parallel to the longitudinal axis.

In any of the aspects or embodiments described above or herein, the method may further include forming, via a directed energy deposition process, an exhaust duct.

In any of the aspects or embodiments described above or herein, the exhaust duct may be integrally formed with the outer casing.

In any of the aspects or embodiments described above or herein, the exhaust duct may be coaxial with and form an extension of the inner duct.

In any of the aspects or embodiments described above or herein, surfaces of the inner duct and the combustor liner may have an Ra surface roughness of greater than 64 microinches.

In any of the aspects or embodiments described above or herein, the outer casing may include a radially inner surface and a radially outer surface each having an Ra surface roughness greater than 64 microinches.

In any of the aspects or embodiments described above or herein, each of the plurality of vanes may have a maximum thickness between the pressure side wall and the suction side wall of approximately 0.025 inches (0.635 mm).

The present summary is provided only by way of example, and not limitation. Other aspects of the present disclosure will be appreciated in view of the entirety of the present disclosure, including the entire text, claims and accompanying figures.

### BRIEF DESCRIPTION OF THE DRAWINGS

Certain exemplary embodiments will now be described in greater detail by way of example only and with reference to the accompanying drawings in which:
FIG. 1 is a cross-sectional view of a core article of a turbine engine.
FIG. 2 is an enlarged view of portion 2 of FIG. 1.
FIG. 3 is a cross-sectional view of the core article taken along the 3-3 line of FIG. 1.
FIG. 4 is a cross-sectional view of an inner body of the core article of FIG. 1 formed in a first manufacturing process.
FIG. 5 is a cross-sectional view of the core article including the inner body of FIG. 4 and an outer casing formed in a second manufacturing process.
FIG. 6 is a flowchart of a method of manufacture of the core article of FIG. 1.

While the above-identified figures set forth embodiments of the present invention, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features, steps and/or components not specifically shown in the drawings.

### DETAILED DESCRIPTION

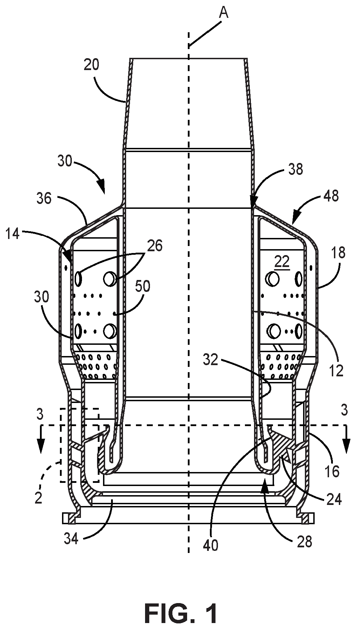

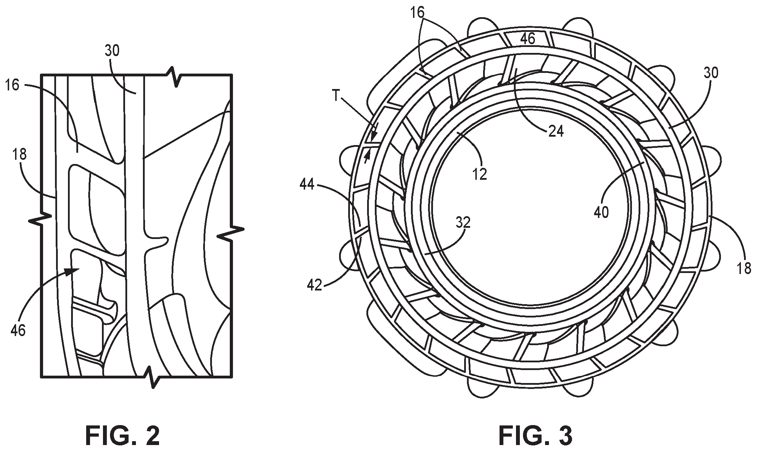

FIG. 1 is a cross-sectional view of core article 10 of a turbine engine. FIG. 2 is an enlarged view of portion 2 of FIG. 1. FIG. 3 is a cross-sectional view of core article 10 taken along the 3-3 line of FIG. 1. FIG. 1-3 are discussed together. Core article 10 can include inner duct 12, combustor liner 14, vanes 16, outer casing 18, exhaust duct 20, and longitudinal axis A. Inner duct 12 is disposed about longitudinal axis A and defines an inner volume. Combustor liner 14 is disposed about inner duct 12 and defines combustion chamber 22. Combustor liner 14 is integrally formed with and attached to inner duct 12 via nozzle guide vanes 24 disposed at an outlet of combustion chamber 22. Outer casing 18 is disposed about combustor liner 14. Vanes 16 connect combustor liner 14 to outer casing 18. Exhaust duct 20 can be disposed aft of inner duct 12, forming an extension thereof. Exhaust duct 20 can be connected to outer casing 18 and inner duct 12.

Core article 10 is configured as a stationary component of a turbine engine. Core article 10 is configured for use with a compressor and turbine (not shown) disposed on a shaft on longitudinal axis A. Vanes 16 are disposed in a forward portion of core article 10 between combustor liner 14 and outer casing 18. This forward portion can define a diffuser section of the turbine engine configured to receive a compressed fluid flow from a compressor. The compressed fluid flow can enter combustion chamber 22 via a plurality of dilution holes 26 in combustor liner 14. Combustion gases can exit combustion chamber 22 via nozzle guide vanes 24. Combustion gases can be expanded through a turbine adjacent to forward end 28 of inner duct 12 and exhausted via inner duct 12 and exhaust duct 20.

Combustor liner 14 is a generally annular structure disposed about longitudinal axis A. Combustor liner 14 includes outer diameter wall 30 and inner diameter 32 arranged to define combustion chamber 22. Outer diameter wall 30 extends from forward end 34 to aft end 36. Outer diameter wall and inner diameter wall 32 can be connected at aft end 36. Inner duct 12 is an annular structure disposed about longitudinal axis A. Inner duct 12 extends from forward end 28 to aft end 38. In some embodiments, forward end 28 can have a bellmouth inlet with a wall that curves to form outer wall 40 as illustrated in FIG. 1. Nozzle guide vanes 24 can extend radially from outer wall 40 to outer diameter wall 30 of combustor liner 14. A plurality of nozzle guide vanes 24 can be disposed circumferentially about outer wall 40. Nozzle guide vanes 24 can be provided in a suitable configuration to direct combustion gases to a turbine of the turbine engine. The shape and configuration of inner duct 12 at forward end 28 is not limited to the embodiment shown. Other configurations suitable for connecting inner duct 12 to combustor liner 14 and defining an outlet of combustion chamber 22 and inlet to a turbine section of the turbine engine may be adopted without departing from the scope of the invention.

Outer diameter wall 30 of combustor liner 14 can extend forward of forward end 28 of inner duct 12 and form a portion of a diffuser section of the turbine engine configured to receive a compressed fluid flow from a compressor. In some examples, inner diameter wall 32 of combustor liner 14 can be received between outer wall 40 and inner duct 12. Inner diameter wall 32 is radially separated from inner duct 12, defining a fluid plenum therebetween.

As illustrated in FIGS. 2 and 3, a plurality of vanes 16 are disposed circumferentially about outer diameter wall 30. Each of vanes 16 includes pressure side wall 42 and suction side wall 44 defining a thickness T therebetween. Vanes 16 extend radially from outer diameter wall 30 to outer casing 18 thereby connecting outer wall 30 to outer casing 18 and forming fluid plenum 46 therebetween. Plenum 46 is a critical fluid flow path. Fluid flow through plenum 46 can be significantly influenced by surface roughness of pressure side walls 42 and suction side wall 44.

Inner duct 12 and combustor liner 14 together define a unitary body 48 formed by a layer-by-layer additive manufacturing process. Inner duct 12 and combustor liner 14 are integrally formed via a powder bed additive manufacturing process capable of forming complex shapes and features of combustor liner 14 and inner duct 12 including, for example, a plurality of cooling holes 50 and dilution holes 26, nozzle guide vanes 24, couplings for fuel nozzles (not shown), etc.

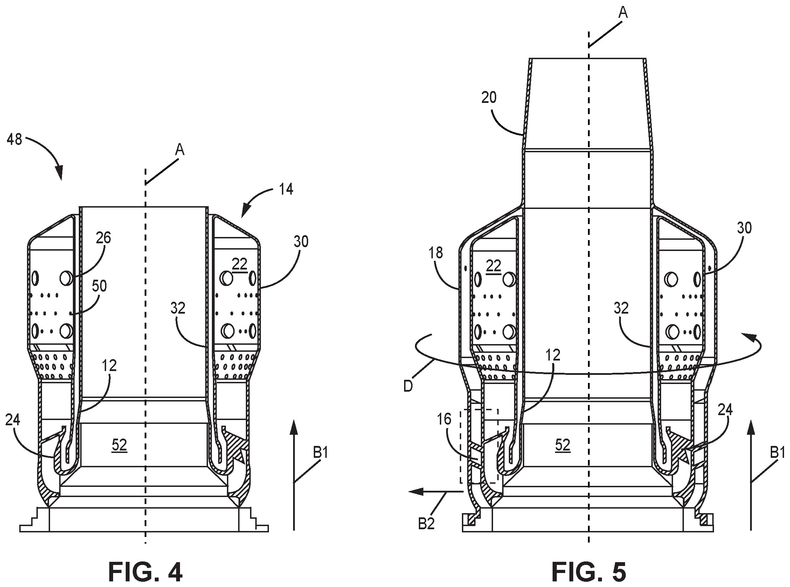

FIG. 4 is a cross-sectional view of body 48 formed in a first additive manufacturing process. FIG. 4 shows body 48, inner duct 12, combustor liner 14, nozzle guide vanes 24, dilution holes 26, outer diameter wall 30, inner diameter wall 32, cooling holes 50, and support structure 52. Body 48 is formed in a layer-by-layer additive manufacturing process along build direction B1, parallel to longitudinal axis A. Body 48 can be formed by laser powder bed fusion (PBF-LB) using processing parameters that can result in an *Ra* surface roughness greater than what is desired for surfaces of vanes 16 (e.g., greater than 64 microinches). In other embodiments, body 48 can be formed via a powder bed electron beam manufacturing process with processing parameters that result in a similar surface roughness. Body 48 can be built on sacrificial support structure 52, which can be removed following build completion. Body 48 can be formed of a material suitable for operation of the turbine engine. For example, body 48 can be formed from a nickel-based superalloy suitable for high temperature applications.

FIG. 5 is a cross-sectional view of core article 10 including body 48 formed in the first additive manufacturing process, and vanes 16, outer casing 18, and exhaust duct 20 formed in a second additive manufacturing process. Vanes 16, outer casing 18, and exhaust duct 20 can be formed around body 48 using a directed energy deposition (DED) technique including, for example, laser-based DED or electron beam-based DED with powder or wire feedstock.

Vanes 16 can be formed directly on a surface of outer diameter wall 30 in an as-built condition (i.e., without surface preparation). Vanes 16 can be formed of any material suitable for welding and operation of the turbine engine. In some embodiments, vanes 16 can be formed from the same material as body 48. In other examples, vanes 16 can be formed from a material different from the material of body 48. For example, body 48, which is exposed to high temperature combustion gases, may be formed from a material with high corrosion and temperature resistance (e.g., Inconel 625); whereas vanes 16, which can be relatively thin, may be formed with a material of increased strength (e.g., Inconel 715).

Vanes 16 are formed in a layer-by-layer process in radially extending build direction B2, orthogonal to longitudinal axis A. Material of vanes 16 can be deposited on body 48 in deposition direction D, extending circumferentially about longitudinal axis A. A first layer of each of the plurality of vanes 16 can be formed followed by successive layers of each of the plurality of vanes 16, such that the plurality of vanes 16 are built with each layer (i.e., the radial height of all vanes 16 increases with each build layer). This allows each layer to cool and solidify before the deposition of successive layers, which can improve stability of the build.

Vanes 16 formed with directed energy deposition can have a smoother surface than surfaces formed with PBF-LB but not sufficiently smooth for optimal performance of the turbine engine. Typically, surfaces of vanes 16 can have an as-build *Ra* surface roughness of around 500 microinches (12.7 µm). Following build completion of vanes 16 and before the build of outer casing 18, pressure side walls 42 and suction side walls 44 of vanes 16 can be smoothed to a desired surface finish suitable for a desired operational performance. For example, surface roughness can be reduced to an *Ra* surface roughness equal to or less than 64 microinches (1.6 µm). Surface roughness of pressure side wall 42 and suction side wall 44 can be reduced by a suitable subtractive post-processing technique (e.g., milling, grinding, etc.). In a non-limiting embodiment, surfaces of vanes 16 can be finished with an end-milling tool, which can easily access vane surfaces. Vanes 16 can be built with additional thickness to accommodate surface finishing. For example, additional material can be deposited on each of pressure side 42 and suction side 44 of vane 16, which can subsequently be removed in a post-build process. In some examples, an additional 0.025 to 0.050 inches (0.635 to 1.27 mm) can be provided as an envelope around vanes 16.

Outer casing 18 and exhaust duct 20 can be integrally built via directed energy deposition following surface finishing of vanes 16. Outer casing 18 and exhaust duct 20 can be built in a layer-by-layer process along build direction B1, parallel to longitudinal axis A. Outer casing 18 and exhaust duct 20 can be formed of the same material as vanes 16. Outer casing 18 can be built on and upward from support structure 52. Each layer of outer casing 18 can circumscribe body 48 following deposition direction D. Vanes 16 provide build supports for outer casing 18, helping to maintain a uniform radial distance between outer casing 18 and body 48. Outer casing 18 connects vanes 16. Outer casing 18 can be concentric with and generally conform to the shape of body 48. The distance between outer diameter wall 30 of combustor liner 14 and outer casing 18 can be uniform or can vary along the length of combustor liner 14 to define a desired shape and size of plenum 46.

Exhaust duct 20 can be formed as an extension of outer casing 18 and inner duct 12. Exhaust duct 20 can be built on aft end 38 of inner duct 12. Process parameters used to build exhaust duct 20 can vary from process parameters used to build outer casing 18 to reduce build time. Exhaust duct 20 can have a wall thickness greater than a wall thickness of outer casing 18. Surfaces of outer casing 18 and exhaust duct 20 can remain as-built without post-processing surface finishing.

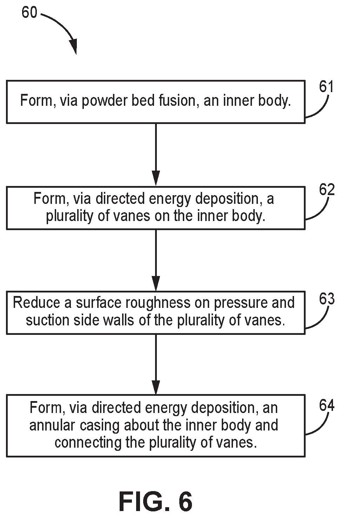

FIG. 6 is a flowchart of method 60 for manufacturing core article 10. In step 61, body 48, including inner duct 12 and combustor liner 14 is formed layer-by-layer via a powder bed fusion manufacturing process. Body 48 can be built on support structure 52 along build direction B1, extending parallel to longitudinal axis A In step 62, vanes 16 are formed on an outer surface of body 48 via directed energy deposition. Vanes 16 are formed are formed in circumferentially extending layers in build direction B2, orthogonal to longitudinal axis A, such that the radial height of each vane 16 increases with each deposited layer. In step 63, a subtractive processing technique is used to reduce a surface roughness of pressure side walls 42 and suction side walls 44 of vanes 16. The surface roughness can be reduced to an *Ra* surface roughness less than 64 microinches (1.6 µm) to provide a desired fluid flow through the diffuser section. In step 64, outer casing 18 and exhaust duct 20 are formed layer-by-layer via directed energy deposition about body 48. Outer casing can be built on and upward from support structure 52 in circumferentially extending layers stacked along build direction B1. Exhaust duct 20 can be built as an extension of outer casing 18 and inner duct 12.

The combination of powder bed fusion and directed energy deposition manufacturing processes can reduce manufacturing cost and increase performance of the turbine engine. Complex features of body 48 that do not require low surface roughness can be formed via powder bed fusion manufacturing, while directed energy deposition can be used to form less complex outer casing 18 and exhaust duct 20 with reduced build time. Access to vanes 16 provided in the directed energy deposition process allows for surface finishing of critical flow surfaces of vanes 16.

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transient alignment or shape variations induced by thermal, rotational or vibrational operational conditions, and the like. Moreover, any relative terms or terms of degree used herein should be interpreted to encompass a range that expressly includes the designated quality, characteristic, parameter or value, without variation, as if no qualifying relative term or term of degree were utilized in the given disclosure or recitation.

### Discussion of Possible Embodiments

The following are non-exclusive descriptions of possible embodiments of the present invention.

A method of manufacturing a core article of a turbine engine includes forming a body comprising an integrally formed annular duct and combustor liner via a powder bed fusion additive manufacturing process. The combustor liner defines a combustion chamber about the inner duct. The body is disposed about a longitudinal axis. The method further includes forming a plurality of vanes on the body via a directed energy deposition additive manufacturing process. The plurality of vanes extends radially from the combustor liner. A surface roughness on surfaces of each of the plurality of vanes is reduced and an annular outer casing is formed via a directed energy deposition additive manufacturing process about the body. The outer casing connects the plurality of vanes.

The method of the preceding paragraph can optionally include, additionally and/or alternatively, any one or more of the following features, configurations, additional components, and/or steps:
In an embodiment of the preceding method, the surface roughness can be reduced to provide an *Ra* surface roughness equal to or less than 64 microinches (1.6 µm).

In an embodiment of any of the preceding methods, the surface roughness can be reduced by a machining tool prior to forming the outer casing.

In an embodiment of any of the preceding methods, the vanes can be formed directly on a surface of the body formed via the powder bed fusion additive manufacturing process.

In an embodiment of any of the preceding methods, the vanes and body can be formed from the same material.

In an embodiment of any of the preceding methods, the directed energy deposition process can include a powder feedstock.

In an embodiment of any of the preceding methods, the directed energy deposition process can include a wire feedstock.

In an embodiment of any of the preceding methods, forming the plurality of vanes can include forming a first layer of the plurality of vanes followed by successive layers of the plurality of vanes. The first layer and successive layers can extend circumferentially about the longitudinal axis and a build direction of the plurality of vanes can be orthogonal to the longitudinal axis.

In an embodiment of any of the preceding methods, the outer casing can be formed along a build direction parallel to the longitudinal axis.

An embodiment of any of the preceding methods can further include forming, via a directed energy deposition process, an exhaust duct. The exhaust duct can be integrally formed with the outer casing.

In an embodiment of any of the preceding methods, the exhaust duct can be coaxial with and forms an extension of the inner duct.

A turbine engine core article includes an inner duct disposed about a longitudinal axis, a combustor liner disposed about the inner duct and defining a combustion chamber, an outer casing disposed about the combustor liner, and a plurality of vanes connecting the outer casing to the combustor liner. Each of the plurality of vanes includes a pressure side wall and a suction side wall having an *Ra* surface roughness equal to or less than 64 microinches (1.6 µm).

The article of the preceding paragraph can optionally include, additionally and/or alternatively, any one or more of the following features, configurations and/or additional components:
In an embodiment of the preceding article, surfaces of the inner duct and the combustor liner can have an *Ra* surface roughness of greater than 64 microinches (1.6 µm).

In an embodiment of any of the preceding articles the outer casing can include a radially inner surface and a radially outer surface each having an *Ra* surface roughness greater than 64 microinches (1.6 µm).

In an embodiment of any of the preceding articles each of the plurality of vanes can have a maximum thickness between the pressure side wall and the suction side wall of approximately 0.025 inches (0.635 mm).

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of manufacturing a core article (10) of a turbine engine, the method comprising:
forming, via a powder bed fusion additive manufacturing process, a body (48) comprising an integrally formed annular duct (12) and combustor liner (14), the combustor liner (14) defining a combustion chamber (22) about the duct (12), the body (48) disposed about a longitudinal axis (A); and
forming, via a directed energy deposition additive manufacturing process, a plurality of vanes (16) on the body (48), the plurality of vanes (16) extending radially from the combustor liner (14);
reducing a surface roughness on surfaces of each of the plurality of vanes (16); and
forming, via a directed energy deposition additive manufacturing process, an annular outer casing (18) about the body (48), the outer casing (18) connecting the plurality of vanes (16).

2. The method of claim 1, wherein the surface roughness is reduced to provide an Ra surface roughness equal to or less than 64 microinches (1.6 µm).

3. The method of claim 1 or 2, wherein the surface roughness is reduced by a machining tool prior to forming the outer casing (18).

4. The method of claim 1, 2 or 3, wherein the vanes (16) are formed directly on a surface of the body (48) formed via the powder bed fusion additive manufacturing process.

5. The method of any preceding claim, wherein the vanes (16) and body (48) are formed from the same material.

6. The method of any preceding claim, wherein the directed energy deposition process comprises a powder feedstock.

7. The method of any preceding claim, wherein the directed energy deposition process comprises a wire feedstock.

8. The method of any preceding claim, wherein forming the plurality of vanes (16) comprises forming a first layer of the plurality of vanes (16) followed by successive layers of the plurality of vanes (16), wherein the first layer and successive layers extend circumferentially about the longitudinal axis and a build direction (B2) of the plurality of vanes (16) is orthogonal to the longitudinal axis.

9. The method of any preceding claim, wherein the outer casing (18) is formed along a build direction (B1) parallel to the longitudinal axis.

10. The method of any preceding claim, further comprising forming, via a directed energy deposition process, an exhaust duct (20), the exhaust duct (20) integrally formed with the outer casing (18).

11. The method of claim 10, wherein the exhaust duct (20) is coaxial with and forms an extension of the duct (12).

12. A turbine engine core article (10) comprising:
a duct (12) disposed about a longitudinal axis (A);
a combustor liner (14) disposed about the duct (12), the combustor liner (14) defining a combustion chamber (22);
an outer casing (18) disposed about the combustor liner (14); and
a plurality of vanes (16) connecting the outer casing (18) to the combustor liner (14), wherein each of the plurality of vanes (16) comprises a pressure side wall (42) and a suction side wall (44), each of the pressure side wall (42) and the suction side wall (44) having an Ra surface roughness equal to or less than 64 microinches (1.6 µm).

13. The article of claim 12, wherein surfaces of the duct (12) and the combustor liner (14) have an Ra surface roughness of greater than 64 microinches (1.6 µm).

14. The article of claim 12 or 13, wherein the outer casing (18) comprises a radially inner surface and a radially outer surface, each of the radially inner and radially outer surfaces having an Ra surface roughness greater than 64 microinches (1.6 µm).

15. The article of claim 12, 13 or 14, wherein each of the plurality of vanes (16) has a maximum thickness between the pressure side wall (42) and the suction side wall (44) of approximately 0.025 inches (0.635 mm).
